(19)

Europäisches
Patentamt
European
Patent Office
Office européen
des brevets

(11)  **EP 3 299 081 A1**

(12)  **EUROPEAN PATENT APPLICATION**
published in accordance with Art. 153(4) EPC

(43) Date of publication:
28.03.2018 Bulletin 2018/13

(21) Application number: 16796183.8

(22) Date of filing: 23.03.2016

(51) Int Cl.:
*B01D 65/06* (2006.01)    *B01D 71/56* (2006.01)
*C11D 7/32* (2006.01)    *C11D 17/08* (2006.01)

(86) International application number:
**PCT/JP2016/059146**

(87) International publication number:
**WO 2016/185789 (24.11.2016 Gazette 2016/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **20.05.2015 JP 2015102911**

(71) Applicant: **Kurita Water Industries Ltd.
Nakano-ku, Tokyo 164-0001 (JP)**

(72) Inventor: **KAWAKATSU, Takahiro
Tokyo 164-0001 (JP)**

(74) Representative: **Hoffmann Eitle
Patent- und Rechtsanwälte PartmbB
Arabellastraße 30
81925 München (DE)**

(54)  **REVERSE OSMOSIS MEMBRANE CLEANER, CLEANING SOLUTION, AND CLEANING METHOD**

(57)    Provided is a cleaning agent capable of preventing a reduction in the rejection rate of an RO membrane which may occur when the membrane is cleaned, the cleaning agent including a membrane protectant that is a basic or hydrophobic amino acid, a peptide containing the amino acid as a constituent amino acid, or a derivative of the amino acid or the peptide. The cleaning agent may further include at least one agent selected from the group consisting of an alkaline agent, a combined chlorine agent, and an oxidizing agent. The amino acid is preferably arginine, lysine, or phenylalanine. Also provided are a cleaning liquid that is an aqueous solution produced by diluting the cleaning agent and a method for cleaning a reverse osmosis membrane with the cleaning liquid.

Fig.1

EP 3 299 081 A1

**Description**

Technical Field

The present invention relates to a cleaning agent and a cleaning liquid for cleaning a reverse osmosis (RO) membrane used in the field of water treatment, when performance of the RO membrane including a permeate flow rate and a salt rejection rate becomes degraded as a result of the RO membrane becoming fouled with organic substances or inorganic substances. The cleaning agent and the cleaning liquid are capable of preventing a reduction in the rejection rate of the membrane which may occur when the membrane is cleaned. The present invention relates also to a method for cleaning an RO membrane with the cleaning liquid.

Background Art

Separation-purification processes that use an RO membrane system consume less energy than systems that use evaporation and electrodialysis and have been widely used for desalination of seawater or salt water, production of industrial water or ultrapure water, wastewater recovery, and the like.

Since fouling of an RO membrane degrades the performance of the RO membrane, an RO membrane is cleaned periodically in order to recover the performance thereof. It has been desired to develop an agent and a process for cleaning RO membranes which are more effective than those known in the related art.

Examples of cleaning agents used for cleaning an RO membrane include acids (e.g., oxalic acid and citric acid), alkalis (e.g., sodium hydroxide), surfactants (e.g., sodium dodecyl sulfate and sodium dodecylbenzenesulfonate), chelating agents (e.g., EDTA), combined chlorine agents, and oxidizing agents. The above cleaning agents are used depending on the properties of a foulant that fouls the membrane (Non-patent Literature 1).

RO membranes are broadly classified into aromatic polyamide RO membranes and cellulose acetate RO membranes in terms of material. Aromatic polyamide RO membranes have low resistance to oxidizing agents but high resistance to alkalis and can be cleaned even under alkaline conditions where the pH is 10 or more. Cellulose acetate RO membranes have low resistance to alkalis and cannot be cleaned under alkali conditions where the pH is 9 or more while having higher resistance to oxidizing agents (e.g., chlorine) than aromatic polyamide RO membranes.

While polylysines, which are used in the present invention, are publicly known as agents for cleaning an ultrafiltration membrane or a microfiltration membrane (Patent Literature 1), it is not known that polylysines may be used also as an agent for cleaning an RO membrane. While polylysines are known as microbiocides and have been used as cleaning agents with the aim of using the bactericidal effects of polylysines, it is not known that polylysines are capable of preventing a reduction in the rejection rate of an RO membrane which may occur when the RO membrane is cleaned.

Various amino acid compounds have been used as microbiocides (Patent Literature 2). The functions and action mechanism of microbiocides are entirely different from those of cleaning agents, which cause foulants to detach or decompose. That is, the bactericidal effects are entirely different from the capability to prevent the degradation of an RO membrane which may occur when the RO membrane is cleaned.

Amino acids are publicly known as agents for forming chloramines (combined chlorines) (Patent Literatures 3 to 5). While chloramines can be formed using any amino acid, the protection effects of an RO membrane according to the present invention cannot be achieved by using an acidic or hydrophilic amino acid, such as glycine or glutamic acid, and are specific to basic amino acids or hydrophobic amino acids. In other words, the advantageous effects of the present invention are not due to chloramines forming combined chlorines.

Amino acid compounds are known as a component of an agent for increasing the rejection rate of an RO membrane (Patent Literature 6). The rejection-rate increaser is an agent that increases the rejection rate of an RO membrane by remaining on the surface of the membrane. The flux of an RO membrane that has been subjected to the rejection-rate-increasing treatment is lower than the flux of the membrane that has not yet been subjected to the treatment. On the other hand, a protectant contained in a membrane-cleaning agent does not remain on the surface of the membrane and does not always increase the rejection rate of the membrane.

As is the premise of using a cleaning agent, cleaning an RO membrane with a cleaning liquid containing a protectant increases the flux of the membrane compared with the flux of the membrane that has not yet been cleaned.

Although various membrane treatment agents containing amino acid compounds have been proposed, it has not been suggested in any of the proposals that an amino acid compound is capable of preventing a reduction in the rejection rate of an RO membrane which may occur when the RO membrane is cleaned. It is not known in the related art that, among amino acid compounds, basic or hydrophobic amino acids serve as an agent that protects an RO membrane or prevents the degradation of an RO membrane while the RO membrane is cleaned.

While the purpose of using the cleaning agent is to recover the permeability of an RO membrane, cleaning an RO membrane may degrade the rejection properties of the RO membrane. For example, in the case where an aromatic polyamide RO membrane is cleaned with a cleaning liquid having a high pH, the higher the pH of the cleaning liquid, the higher the cleaning effect, but the higher the risk of reduction in the rejection rate of the RO membrane.

Although there have been reported, as described in Non-patent Literature 1, components of a cleaning agent which enhance the capability of the cleaning agent to clean an RO membrane, components of a cleaning agent which prevent a reduction in the rejection rate of an RO membrane which may occur when the RO membrane is cleaned, that is, the components that protect an RO membrane, have not been studied.

Patent Literature 1: JP H08-309164 A
Patent Literature 2: JP 2004-82021 A
Patent Literature 3: JP 2003-144865 A
Patent Literature 4: JP S63-100998 A
Patent Literature 5: JP 2015-9178 A
Patent Literature 6: JP 5633517 B

Non-patent Literature 1: "Outline of Membrane Separation Technology (Vol. 1), published by Fuji Techno System, p. 836 (1991)

Summary of Invention

An object of the present invention is to provide a cleaning agent and a cleaning liquid that prevent a reduction in a rejection rate of an RO membrane which may occur when the RO membrane is cleaned and a method for cleaning an RO membrane with the cleaning liquid.

The inventor of the present invention studied the phenomenon in which the rejection properties of an RO membrane become degraded when the RO membrane is cleaned and, as a result, found the following knowledges.

(1) Cleaning an RO membrane reduces the salt rejection rate and the silica rejection rate of the RO membrane and, in particular, the rejection rate at which the RO membrane rejects IPA (isopropyl alcohol), which is a neutral solute.
(2) A cleaning liquid that reduces the above rejection rates is under alkaline conditions where the pH is 10 or more. The higher the pH of the cleaning liquid, the larger the negative impacts of the cleaning liquid. Combined chlorine agents and oxidizing agents also reduce the above rejection rates.

The inventor of the present invention further conducted extensive studies in order to address the above issues and, as a result, found that adding a basic or hydrophobic amino acid or a peptide containing the amino acid as a constituent amino acid to the cleaning agent prevents a reduction in the rejection rate of an RO membrane which may occur when the RO membrane is cleaned.

The summary of the present invention is as follows.

[1] An agent for cleaning a reverse osmosis membrane, the agent comprising a membrane protectant, the membrane protectant being a basic or hydrophobic amino acid, a peptide containing the amino acid as a constituent amino acid, or a derivative of the amino acid or the peptide.
[2] The agent for cleaning a reverse osmosis membrane according to [1], wherein the amino acid is at least one amino acid selected from the group consisting of arginine, lysine, and phenylalanine.
[3] The agent for cleaning a reverse osmosis membrane according to [1] or [2], the agent further comprising at least one selected from the group consisting of an alkaline agent, a combined chlorine agent, and an oxidizing agent.
[4] A liquid for cleaning a reverse osmosis membrane, the liquid being an aqueous solution produced by diluting the agent for cleaning a reverse osmosis membrane according to any one of [1] to [3].
[5] A liquid for cleaning a reverse osmosis membrane, the liquid comprising a membrane protectant and at least one selected from the group consisting of an alkaline agent, a combined chlorine agent, and an oxidizing agent, the membrane protectant being a basic or hydrophobic amino acid, a peptide containing the amino acid as a constituent amino acid, or a derivative of the amino acid or the peptide.
[6] The liquid for cleaning a reverse osmosis membrane according to [4] or [5], the liquid having a pH of 10 to 14.
[7] A method for cleaning a reverse osmosis membrane, the method comprising bringing a reverse osmosis membrane into contact with the liquid for cleaning a reverse osmosis membrane according to any one of [4] to [6].
[8] The method for cleaning a reverse osmosis membrane according to [7], wherein the reverse osmosis membrane is an aromatic polyamide reverse osmosis membrane. Advantageous Effects of Invention

According to the present invention, it is possible to prevent the degradation in the rejection properties of an RO membrane which may be caused by high-alkaline conditions, a combined chlorine agent, an oxidizing agent, and the like that are used when the RO membrane is cleaned. This makes it possible to employ a cleaning method that is likely to degrade the rejection properties of an RO membrane but achieves a large cleaning effect and to clean an RO membrane with further effect.

Brief Description of Drawings

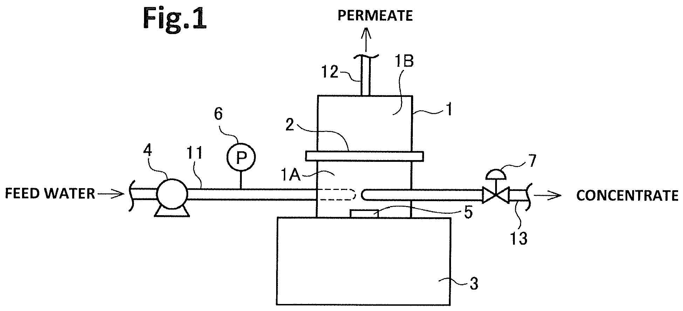

Fig. 1 is a system diagram illustrating a testing apparatus used in Tests I to IV.

Description of Embodiments

Embodiments of the present invention are described below in detail.

[Mechanism of Action]

The mechanism of action according to the present invention is as follows.
Amino acids and peptides have a structure analogous to amide bonds included in aromatic polyamide RO membranes and a strong affinity for the amide bond portions. In particular, basic amino acids have a high affinity for negatively charged surfaces of the membranes. Hydrophobic amino acids have a high affinity for the aromatic ring portions of the membranes. The above substances are therefore considered to adsorb onto RO membranes and prevent the amide bonds of the membrane from being broken by a cleaning liquid.
The mechanism of action according to the present invention is that, while the surface of an RO membrane is cleaned, the amino acids, the peptides, and the like adsorb on the surface of the membrane and reduce the degradation of the membrane which is caused by a cleaning agent. Therefore, the type of amino acids used in the present invention is limited to a hydrophobic or basic amino acid having a high affinity for the surface of an RO membrane. Acidic or hydrophilic amino acids have a low affinity for RO membranes and low adsorptivity to RO membranes and are not capable of protecting the membranes during cleaning.
Amino acids, which are low-molecular compounds, are removed from an RO membrane when the membrane is flushed with the cleaning liquid and do not remain adsorbed on the membrane. Even in the case where a peptide is used, using a peptide having an adequate molecular weight at an adequate concentration reduces the amount of peptide remaining on the membrane.

[RO Membrane]

The RO membrane that is to be cleaned in the present invention may be an aromatic polyamide RO membrane or a cellulose acetate RO membrane. The present invention is particularly effective for the cleaning of aromatic polyamide RO membranes in terms of the affinity of the amino acid or the peptide for the amide bond portions of aromatic polyamide RO membranes.

[Cleaning Agent]

The cleaning agent according to the present invention contains a basic or hydrophobic amino acid, a peptide containing the amino acid as a constituent amino acid, or a derivative of the amino acid or the peptide (hereinafter, the above components are referred to as "protectant components") which serves as a membrane protectant or a membrane degradation inhibitor. The cleaning agent according to the present invention is normally prepared by dissolving, in water, the protectant component and optional components such as an alkaline agent, a combined chlorine agent, and other chemicals.
The term "cleaning agent" used herein refers to an agent that is prepared for the distribution and storage of the products and contains chemicals at concentrations higher than those required when the chemicals are used for cleaning membranes. The term "cleaning liquid" used herein refers to a liquid prepared by diluting the cleaning agent with water to the chemical concentrations at which membranes are cleaned with the chemicals.

<Protectant Component>

Examples of the basic amino acid used as a protectant component of the cleaning agent according to the present invention include arginine, lysine, and histidine. Examples of the hydrophobic amino acid used as a protectant component of the cleaning agent according to the present invention include phenylalanine and tryptophan. Examples of the peptide including the above amino acid as a constituent amino acid include aspartame, which is a phenylalanine-aspartic acid peptide including a methyl-esterified phenylalanine section, and polylysine ($\varepsilon$-polylysine), which is a homopolypeptide of lysine. Examples of the derivative of the above amino acid or the peptide include amino acid benzyl ester and amino acid butyl ester that include a hydrophilic amino acid and a hydrophobic group bonded to the C-terminal of the hydrophilic amino acid; and Z-amino acid derivative that includes a hydrophilic amino acid and a hydrophobic group bonded to the N-terminal of the hydrophilic amino acid. The above protectant components may be used alone or in a mixture of two or more.

Among the above protectant components, arginine, lysine, and phenylalanine are particularly preferable in consideration of the protection of an RO membrane, solubility, and ease of availability.

The molecular weights of the peptide and the derivative of the peptide are preferably 10,000 or less, because a peptide having an excessively large molecular weight is highly likely to remain on the surface of the membrane and degrade the cleaning effect.

<Other Components>

The cleaning agent according to the present invention may optionally include, in addition to the protectant component, an alkaline agent, a combined chlorine agent, an oxidizing agent, other chemicals, a solvent other than water, and the like which are required for cleaning RO membranes.

Examples of the alkaline agent contained in the cleaning agent according to the present invention include hydroxides of alkali metals, such as sodium hydroxide and potassium hydroxide.

Examples of the combined chlorine agent include chloramine compounds.

The chloramine compounds are preferably produced by mixing any of a compound including a primary amino group, ammonia, and an ammonium salt (hereinafter, these compounds are referred to as "$NH_2$ compounds") with hypochlorous acid and/or a hypochlorite.

Examples of the compound including a primary amino group include aliphatic amines, aromatic amines, sulfamic acid, sulfanilic acid, sulfamoylbenzoic acid, and amino acid. Examples of the ammonium salt include ammonium chloride and ammonium sulfate. The above compounds may be used alone or in a mixture of two or more. Among the $NH_2$ compounds, sulfamic acid ($NH_2SO_2OH$) is preferable. Monochlorosulfamine prepared from sulfamic acid is a stable chloramine compound. Sulfamic acid, which does not include carbon, does not increase the TOC of the cleaning agent. It is possible to produce a markedly effective cleaning agent by using sulfamic acid in combination with the alkaline agent.

Examples of the hypochlorite reacted with the $NH_2$ compound include alkali-metal salts of hypochlorous acid, such as sodium hypochlorite, and alkaline-earth-metal salts of hypochlorous acid, such as calcium hypochlorite. The above hypochlorites may be used alone or in a mixture of two or more.

When the chloramine compound is produced by mixing the $NH_2$ compound with hypochlorous acid and/or the hypochlorite, it is preferable to use the $NH_2$ compound and hypochlorous acid and/or the hypochlorite such that the molar ratio between available chlorine ($Cl_2$) resulting from hypochlorous acid and/or the hypochlorite and nitrogen atoms N resulting from the $NH_2$ compound, that is, $Cl_2$/N molar ratio, is 0.1 to 1 in consideration of the efficiency and consistency of the production of chloramine.

If the $Cl_2$/N molar ratio is higher than the upper limit, free chlorine may be produced. If the $Cl_2$/N molar ratio is lower than the lower limit, the efficiency of the production of chloramine may be low compared with the amount of $NH_2$ compound used.

In this case, the amount of hypochlorous acid and/or the hypochlorite is equal to the amount of chloramine compound included in the cleaning agent.

Examples of the oxidizing agent include hydrogen peroxide; peracetic acid; percarbonic acid; oxoacids of halogens, such as hypochlorous acid; salts of these acids (e.g., alkali-metal salts and alkaline-earth-metal salts); peroxides; and halogens such as chlorine, bromine, and iodide. The above oxidizing agents may be used alone or in combination of two or more.

Examples of the solvent include alcohols, such as ethanol; polyols, such as ethylene glycol, propylene glycol, and butanediol; amines, such as monoethanolamine, diethanolamine, and triethanolamine; ketones, such as acetone; and ethers, such as dimethyl ether, diethyl ether, and diethylene glycol monomethyl ether.

Examples of the other chemicals include a surfactant and a dispersant.

Examples of the surfactant include anionic surfactants, such as alkylbenzene sulfonates (e.g., sodium dodecylbenzenesulfonate) and alkyl sulfates (e.g., sodium dodecyl sulfate), and nonionic surfactants, such as polyalkylene glycol monoalkyl ethers (e.g., diethylene glycol monomethyl ether).

Among the above surfactants, in particular, anionic surfactants are preferable in consideration of dispersion effect.

Examples of the dispersant include ethylenediamine tetraacetate (EDTA), glycol ether diamine tetraacetate (EGTA), polyphosphoric acid, phosphonobutanetricarboxylic acid (PBTC), phosphonic acid, polymaleic acid, citric acid, oxalic acid, gluconic acid, and the salts of the above acids.

The above dispersants may be used alone or in combination of two or more.

The cleaning agent may be a one-part cleaning agent prepared by mixing the protectant component with the alkaline agent, the combined chlorine agent, the oxidizing agent, the other chemicals, the solvent, and the like. The cleaning agent may also be a two-part cleaning agent, that is, some of the above components may be separately provided in the form of a second part of the agent. Alternatively, the cleaning agent may be constituted by three or more parts.

The cleaning liquid according to the present invention, which is prepared by diluting the cleaning agent according to the present invention with water, may also be constituted by one part, two parts, or three or more parts. In the case where the cleaning liquid is constituted by two parts or three or more parts, for example, an RO membrane is cleaned with a cleaning liquid including the protectant component and subsequently with another cleaning liquid including other chemicals such as an acid.

The concentration of each chemical in the cleaning agent according to the present invention is controlled to be about 5 to 100 times by weight the concentration of the chemical in the cleaning liquid according to the present invention, which is described below, such that the preferable concentration of the chemical in the cleaning liquid is achieved by diluting the cleaning agent with water, which is preferably pure water, about 5 to 100 times by weight.

[Cleaning Liquid]

The cleaning liquid according to the present invention is an aqueous solution prepared by diluting the above-described cleaning agent according to the present invention with water. The cleaning liquid according to the present invention may also be prepared by diluting the cleaning agent according to the present invention with water and optionally adding the alkaline agent, the combined chlorine agent, the oxidizing agent, the other chemicals, the solvent, and the like to the diluted cleaning agent at the predetermined concentrations.

The cleaning liquid according to the present invention is not necessarily prepared from the cleaning agent according to the present invention and may be directly prepared such that the predetermined chemical concentrations are achieved.

The concentration of the protectant component in the cleaning liquid according to the present invention varies with the type of the protectant component used, the pH of the cleaning liquid, the type and concentration of the other detergent used, and the like. In the case where the protectant component is selected from the basic amino acid, the hydrophobic amino acid, and a derivative of the basic amino acid or the hydrophobic amino acid, the concentration of the protectant component in the cleaning liquid according to the present invention is preferably about 0.01% to 10% by weight. In the case where the protectant component is the peptide or a derivative of the peptide, the concentration of the protectant component is preferably about 0.00001% to 1% by weight. In the case where the protectant component is a peptide of polylysine or the like, the concentration of the protectant component is preferably about 0.001% to 0.1% by weight when the protectant component is used in combination with a combined chlorine agent and is preferably about 0.00001% to 0.001% by weight when the protectant component is not used in combination with a combined chlorine agent. If the concentration of the protectant component is lower than the lower limit, it is not possible to sufficiently protect an RO-membrane by using the protectant component and the rejection rate may be reduced when the membrane is cleaned. If the concentration of the protectant component is higher than the upper limit, the cleaning effect may be reduced. Furthermore, the nitrogen content in the waste cleaning liquid may unnecessarily increase.

The pH of the cleaning liquid according to the present invention is preferably 10 to 14 in consideration of the cleaning effect.

If the pH of the cleaning liquid is less than 10, the permeability of the membrane may fail to be sufficiently recovered when the membrane is cleaned. The higher the pH of the cleaning liquid, the larger the cleaning effect. However, if the pH of the cleaning liquid is excessively high, ease of handling of the cleaning liquid is reduced and the risk of the degradation of the RO membrane is increased. The pH of the cleaning liquid is preferably 14 or less and is more preferably 11 or more and 13 or less.

The pH of the cleaning liquid according to the present invention is controlled to be the above preferable pH value by the addition of the alkaline agent.

In the case where the cleaning liquid according to the present invention contains a combined chlorine agent, which is preferably a chloramine compound and is particularly preferably monochlorosulfamic acid, the concentration of the combined chlorine agent in the cleaning liquid according to the present invention is preferably 0.003 to 0.15 M (0.04% to 2% by weight) and is particularly preferably 0.003 to 0.03 M (0.04% to 0.4% by weight). If the concentration of the combined chlorine agent in the cleaning liquid is excessively low, a sufficient cleaning effect may fail to be achieved. If the concentration of the combined chlorine agent in the cleaning liquid is excessively high, the cleaning liquid may degrade the RO membrane. A combined chlorine agent concentration of 0.003 to 0.15 M is equivalent to a total chlorine concentration of 210 to 11,000 mg-$Cl_2$/L. The total chlorine concentration can be measured by the DPD method defined in, for example, JIS K0400-33-10. 1999.

In the case where the cleaning liquid according to the present invention includes the oxidizing agent, the concentration of the oxidizing agent in the cleaning liquid according to the present invention is preferably 0.000001% to 10% by weight and is particularly preferably 0.00001% to 1% by weight. If the concentration of the oxidizing agent in the cleaning liquid is excessively low, a sufficient cleaning effect may fail to be achieved. If the concentration of the oxidizing agent in the cleaning liquid is excessively high, RO membranes may become degraded.

In the case where the cleaning liquid according to the present invention includes the surfactant, the concentration of the surfactant in the cleaning liquid according to the present invention is preferably 0.005% to 2% by weight and is particularly preferably 0.02% to 0.5% by weight. If the concentration of the surfactant is excessively low, a sufficient dispersion effect of the surfactant may fail to be achieved. In addition, the cleaning effect may fail to be sufficiently enhanced by using the surfactant. If the concentration of the surfactant in the cleaning liquid is excessively high, the degree of association of surfactant molecules is increased. This may reduce the cleaning effect.

In the case where the cleaning liquid according to the present invention includes the dispersant, the concentration of the dispersant in the cleaning liquid according to the present invention is preferably 0.01% to 5% by weight and is particularly preferably 0.1% to 2% by weight. If the concentration of the dispersant is excessively low, the dispersion effect of the dispersant may fail to be achieved to a sufficient degree. If the concentration of the dispersant in the cleaning liquid is excessively high, the cleaning effect is not increased compared with the concentration of the dispersant.

<Method for Producing Cleaning Agent and Cleaning Liquid>

The cleaning agent according to the present invention is prepared by mixing the protectant component and the optional components such as the alkaline agent, the combined chlorine agent, the oxidizing agent, the other chemicals, and the solvent with water.

In the case where a cleaning agent including the chloramine compound is prepared, an $NH_2$ compound such as sulfamic acid is dissolved in an aqueous solution of an alkaline agent, and hypochlorous acid and/or the hypochlorite is mixed with the resulting aqueous solution of the $NH_2$ compound. The proportion of the amount of water in the aqueous solution of an alkaline agent is preferably 50% to 90% by weight. In the case where a cleaning agent including the surfactant is prepared, the surfactant may be used in any of the steps for preparing the cleaning agent. That is, the surfactant may be added to the aqueous solution of an alkaline agent. Alternatively, the surfactant may be added to the aqueous solution of the $NH_2$ compound together with hypochlorous acid and/or the hypochlorite or prior or subsequent to the addition of hypochlorous acid and/or the hypochlorite. It is preferable to add the surfactant to the aqueous solution of the $NH_2$ compound subsequent to the addition of hypochlorous acid and/or the hypochlorite.

The compound including a primary amino group, such as sulfamic acid, may be used in the form of a salt. Examples of the salt include sodium sulfamate, potassium sulfamate, and ammonium sulfamate, which are soluble in the cleaning liquid according to the present invention. The $NH_2$ compound is used such that the concentration of the chloramine compound in the cleaning liquid according to the present invention, which is prepared by diluting the cleaning agent according to the present invention, is the above concentration. It is preferable to determine the amount of $NH_2$ compound used such that the ratio between the amount of alkaline agent and the amount of $NH_2$ compound, that is, N/alkali metal (molar ratio), is 0.5 to 0.7. The $NH_2$ compound can be used in the form of a powder or an aqueous solution. In the case where a sulfamic acid salt is used as an $NH_2$ compound, the amount of alkali metal included in the sulfamic acid salt is included in the calculation of the amount of alkali. In the case where the $NH_2$ compound is used in the form of an aqueous solution, the amount of water included in the aqueous solution is included in the calculation of the amount of water included in the aqueous alkaline solution.

Hypochlorous acid and/or the hypochlorite is preferably used in the form of an aqueous solution in which the concentration of available chlorine ($Cl_2$) is 5% to 20% by weight and is preferably 10% to 15% by weight. Hypochlorous acid and/or the hypochlorite is used such that the concentration of the chloramine compound in the cleaning liquid according to the present invention, which is prepared by diluting the cleaning agent according to the present invention, is the above concentration and the ratio between the amount of $NH_2$ compound and the amount of hypochlorous acid and/or the hypochlorite is the above $Cl_2/N$ molar ratio. This makes it possible to efficiently produce the cleaning agent according to the present invention which is an aqueous solution agent that has high reactivity and high stability and is easy to handle and free of chlorine smell without foaming or generation of chlorine smell. Also in such a case, it is preferable to gradually mix hypochlorous acid and/or the hypochlorite with the aqueous solution of the $NH_2$ compound.

The cleaning liquid according to the present invention is produced by diluting the cleaning agent according to the present invention which is produced in the above-described manner, with water, which is preferably pure water, and optionally adding the alkaline agent, the combined chlorine agent, the oxidizing agent, the other chemicals, the solvent, and the like to the diluted cleaning agent. The cleaning liquid according to the present invention is not necessarily produced from the cleaning agent according to the present invention and may be directly produced by the above-described method.

<Cleaning Method>

For cleaning an RO membrane with the cleaning liquid according to the present invention, any method in which the cleaning liquid is brought into contact with the RO membrane may be employed. One of the common methods is immersion cleaning, in which the cleaning liquid is introduced into a raw-water-side portion of an RO-membrane module and the RO-membrane module is subsequently left to stand.

In the case where the cleaning agent and the cleaning liquid according to the present invention are constituted by two parts or three or more parts, the parts may be mixed together before used for cleaning. Alternatively, the parts may be each separately used and cleaning may be performed in multiple stages with the respective parts. For example, after cleaning has been performed with a cleaning liquid including the protectant component, another cleaning is performed with a cleaning liquid including an acid and another cleaning agent.

The same immersion cleaning method as described above may be generally used even in the case where cleaning using another cleaning liquid, such as an aqueous alkaline solution or an aqueous acidic solution, is performed prior or subsequent to the cleaning using the cleaning liquid according to the present invention.

An example of cleaning using a cleaning liquid other than the cleaning liquid according to the present invention is cleaning using an aqueous alkaline solution that does not contain the protectant component subsequent to the cleaning using the cleaning liquid according to the present invention. Examples of an alkaline agent included in the aqueous alkaline solution are the same as the above-described alkaline agents included in the cleaning liquid according to the present invention. The pH of the aqueous alkaline solution is preferably 10 or more and is particularly preferably 11 to 13 in consideration of the cleaning effect and ease of handling.

Another example of cleaning using a cleaning liquid other than the cleaning liquid according to the present invention is cleaning using an aqueous acidic solution, which is effective for the removal of scale and metal colloid particles. For performing cleaning using an aqueous acidic solution, an aqueous solution that includes one or more acids selected from hydrochloric acid, nitric acid, citric acid, oxalic acid, and the like may be used. The pH of the aqueous acidic solution is preferably 4 or less and is particularly preferably 1 to 3 in consideration of the cleaning effect and ease of handling.

The amount of time during which immersion cleaning using the cleaning liquid according to the present invention or the other cleaning liquid is performed is not limited and may be set such that the properties of the membrane are recovered to a desired level. Immersion cleaning is commonly performed for about 2 to 24 hours.

In the case where the cleaning using the cleaning liquid according to the present invention and the cleaning using the aqueous alkaline solution and/or the aqueous acidic solution are performed in a combined manner, the order in which the cleaning steps are conducted is not limited. Performing cleaning using the aqueous acidic solution prior to the cleaning using the cleaning liquid according to the present invention enables efficient removal of scale components.

Subsequent to the cleaning using the above cleaning liquids, commonly, high-purity water such as pure water is passed through the membrane in order to perform finish-cleaning. Subsequently, the operation of the RO membrane system is restarted.

EXAMPLES

The present invention is described below further specifically with reference to Examples.

The following reagents were used in Tests I to IV below. Sodium chloride, sodium metasilicate nonahydrate (for preparation of silica solution), hydrochloric acid, isopropyl alcohol (IPA), amino acids, and sodium hydroxide were obtained from Wako Pure Chemical Industries, Ltd. Aspartame was obtained from Ajinomoto Healthy Supply Co., Inc, and ε-polylysine (molecular weight: 4,000 to 5,000) was obtained from JNC Corporation.

Sodium dodecylbenzenesulfonate was obtained from Wako Pure Chemical Industries, Ltd. Monochlorosulfamic acid was synthesized from sulfamic acid (Wako Pure Chemical Industries, Ltd.), sodium hypochlorite (ASAHI GLASS CO., LTD.), and sodium hydroxide by the method described in

<Method for Producing Cleaning Agent and Cleaning Liquid>

In the tests described below, in the test in which a membrane was immersed in a cleaning liquid, it is preferable that the rejection rate does not decrease and an increase in the pure-water flux is prevented. In other words, it is unfavorable that the flux increase after the immersion test has been conducted because the flux increases when the membrane becomes degraded by the cleaning liquid.

However, it is preferable that the flux of a fouled membrane increase after the membrane has been cleaned.

[Test I]

A test was conducted under the following conditions in order to determine the impacts of the number of times a membrane was immersed in a cleaning liquid containing the protectant component on the rejection rate and the pure-water flux.

<RO Membrane>

New membrane: Aromatic polyamide RO membrane "ES20" (produced by Nitto Denko Corporation), unused item

<Cleaning Agents>

Cleaning agent (1): 20-weight% glycine and 0.4-weight% aqueous sodium hydroxide solution
Cleaning agent (2): 20-weight% asparagine, 0.4-weight% aqueous sodium hydroxide solution
Cleaning agent (3): 20-weight% aspartic acid, 0.4-weight% aqueous sodium hydroxide solution
Cleaning agent (4): 20-weight% arginine, 0.4-weight% aqueous sodium hydroxide solution
Cleaning agent (5): 20-weight% aspartame, 0.4-weight% aqueous sodium hydroxide solution
Cleaning agent (6): 0.001-weight% ε-polylysine, 0.4-weight% aqueous sodium hydroxide solution
Cleaning agent (7): 3-weight% phenylalanine, 0.4-weight% aqueous sodium hydroxide solution

<Testing Apparatus and Calculation Formula>

The flat-membrane testing apparatus illustrated in Fig. 1 was used.
In the flat-membrane testing apparatus, RO-membrane feed water is fed to a raw-water chamber 1A included in a closed container 1 with a high-pressure pump 4 through a pipe 11. The raw-water chamber 1A is located below an RO membrane cell 2 including an RO membrane. The inside of the raw-water chamber 1A, which is located below the RO membrane cell 2, is stirred by a stirrer 3 rotating a stirring bar 5. The permeate of the RO membrane is passed to a permeate chamber 1B located above the RO membrane cell 2 and subsequently extracted through a pipe 12. The concentrate is extracted through a pipe 13. The pressure inside the raw-water chamber 1A of the closed container 1 is adjusted with a pressure gage 6 disposed on the feed pipe 11 and a pressure control valve 7 disposed on the concentrate-extraction pipe 13.
The flux and rejection rate of the RO membrane were calculated using the following formulae.

$$\text{Flux [m/day]} =$$

$$\text{Flow Rate of Permeate [m}^3\text{/day]/Area of Membrane}$$

$$\text{[m}^2\text{]} \times \text{Temperature Conversion Coefficient [-]}$$

$$\text{Rejection Rate [\%]} =$$

$$\{1 - (\text{Concentration of Permeate}$$

$$\text{[mg/L]/Concentration of Concentrate [mg/L]}\} \times 100$$

<Test Procedure>

(1) The pure-water flux of the new membrane was measured at 0.75 MPa and 25°C. A reference solution for the measurement of rejection rates (aqueous solution containing 500 mg/L of sodium chloride, 20 mg/L of silica, and 15.7 mg/L of IPA, which was prepared by mixing sodium chloride, sodium metasilicate nonahydrate, and IPA with water) was passed through the membrane at 0.75 MPa and 25°C. Subsequently, the rejection rates at which sodium chloride (NaCl), silica, and IPA were rejected by the membrane were measured.

(2) The membrane used in (1) was immersed in a cleaning liquid for 15 hours and then flushed with pure water for 2 hours. Subsequently, the pure-water flux of the membrane and the rejection rates at which sodium chloride (NaCl), silica, and IPA were rejected by the membrane were measured using the rejection-rate-measuring reference solution.

(3) A cycle of immersing the membrane in the cleaning liquid for 15 hours and subsequently flushing the membrane with pure water for 2 hours as in (2) was repeated. The pure-water flux of the membrane and the rejection rates at which sodium chloride (NaCl), silica, and IPA were rejected by the membrane were measured using the rejection-rate-measuring reference solution after the fourth and eighth cycles of immersion and flushing. The above test is an accelerated test simulating multiple cleanings by repeatedly immersing the membrane in the cleaning liquid.

<Comparative Example I-1>

The above-described test was conducted using an aqueous sodium hydroxide solution having a pH of 12 as a cleaning liquid.

<Comparative Example I-2>

The above-described test was conducted using, as a cleaning liquid, an aqueous sodium hydroxide solution containing 2-weight% glycine and having a pH of 12 which was prepared by diluting the cleaning agent (1) 10 times with pure water.

<Comparative Example I-3>

The above-described test was conducted using, as a cleaning liquid, an aqueous sodium hydroxide solution containing 2-weight% asparagine and having a pH of 12 which was prepared by diluting the cleaning agent (2) 10 times with pure water.

<Comparative Example I-4>

The above-described test was conducted using, as a cleaning liquid, an aqueous sodium hydroxide solution containing 2-weight% aspartic acid and having a pH of 12 which was prepared by diluting the cleaning agent (3) 10 times with pure water.

<Example I-1>

The above-described test was conducted using, as a cleaning liquid, an aqueous sodium hydroxide solution containing 2-weight% arginine and having a pH of 12 which was prepared by diluting the cleaning agent (4) 10 times with pure water.

<Example I-2>

The above-described test was conducted using, as a cleaning liquid, an aqueous sodium hydroxide solution containing 2-weight% aspartame and having a pH of 12 which was prepared by diluting the cleaning agent (5) 10 times with pure water.

<Example I-3>

The above-described test was conducted using, as a cleaning liquid, an aqueous sodium hydroxide solution containing 0.0001-weight% ε-polylysine and having a pH of 12 which was prepared by diluting the cleaning agent (6) 10 times with pure water.

<Example I-4>

The above-described test was conducted using, as a cleaning liquid, an aqueous sodium hydroxide solution containing 0.3-weight% phenylalanine and having a pH of 12 which was prepared by diluting the cleaning agent (7) 10 times with pure water. The immersion test was conducted only once.

<Results>

Tables 1a to 1h show the results of tests conducted in Comparative examples I-1 to 1-4 and Examples I-1 to 1-4, respectively.

[Table 1a]

| <Comparative example I-1 (cleaning liquid: aqueous sodium hydroxide solution having a pH of 12)> | | | | |
|---|---|---|---|---|
| Number of times immersed [time] | NaCl rejection rate [%] | IPA rejection rate [%] | Silica rejection rate [%] | Pure-water flux [m/day] |
| 0 | 99.1 | 82.9 | 98.4 | 1.50 |
| 1 | 99.0 | 74.8 | 97.9 | 1.74 |
| 4 | 98.9 | 69.5 | 97.4 | 1.90 |
| 8 | 98.8 | 65.8 | 97.3 | 1.97 |

[Table 1b]

| <Comparative example I-2 (cleaning liquid: 2-weight% aqueous glycine solution having a pH of 12)> | | | | |
|---|---|---|---|---|
| Number of times immersed [time] | NaCl rejection rate [%] | IPA rejection rate [%] | Silica rejection rate [%] | Pure-water flux [m/day] |
| 0 | 98.9 | 80.0 | 97.9 | 1.58 |
| 1 | 98.3 | 71.6 | 95.9 | 1.63 |
| 4 | 97.6 | 68.5 | 94.7 | 1.83 |
| 8 | 97.7 | 61.5 | 93.6 | 1.93 |

[Table 1c]

| < Comparative example I-3 (cleaning liquid: 2-weight% aqueous asparagine solution having a pH of 12)> | | | | |
|---|---|---|---|---|
| Number of times immersed [time] | NaCl rejection rate [%] | IPA rejection rate [%] | Silica rejection rate [%] | Pure-water flux [m/day] |
| 0 | 98.7 | 79.6 | 97.7 | 1.60 |
| 1 | 98.4 | 70.9 | 97.0 | 1.85 |
| 4 | 98.1 | 69.0 | 96.7 | 1.89 |
| 8 | 98.0 | 66.2 | 96.1 | 1.90 |

[Table 1d]

| <Comparative example I-4 (cleaning liquid: 2-weight% aqueous aspartic acid solution having a pH of 12)> | | | | |
|---|---|---|---|---|
| Number of times immersed [time] | NaCl rejection rate [%] | IPA rejection rate [%] | Silica rejection rate [%] | Pure-water flux [m/day] |
| 0 | 98.5 | 78.8 | 97.4 | 1.60 |
| 1 | 98.2 | 68.5 | 96.5 | 1.84 |
| 4 | 97.9 | 59.7 | 96.0 | 1.97 |
| 8 | 97.8 | 57.8 | 95.6 | 2.07 |

[Table 1e]

| <Example I-1 (cleaning liquid: 2-weight% aqueous arginine solution having a pH of 12)> | | | | |
|---|---|---|---|---|
| Number of times immersed [time] | NaCl rejection rate [%] | IPA rejection rate [%] | Silica rejection rate [%] | Pure-water flux [m/day] |
| 0 | 98.5 | 79.3 | 97.2 | 1.36 |
| 1 | 98.1 | 80.1 | 97.1 | 1.34 |
| 4 | 98.0 | 77.0 | 96.8 | 1.45 |
| 8 | 97.9 | 77.3 | 96.6 | 1.51 |

[Table 1f]

| <Example I-2 (cleaning liquid: 2-weight% aqueous aspartame solution having a pH of 12)> | | | | |
|---|---|---|---|---|
| Number of times immersed [time] | NaCl rejection rate [%] | IPA rejection rate [%] | Silica rejection rate [%] | Pure-water flux [m/day] |
| 0 | 98.5 | 78.9 | 97.6 | 1.60 |
| 1 | 98.4 | 69.6 | 97.1 | 1.80 |
| 4 | 98.4 | 73.0 | 97.4 | 1.70 |
| 8 | 98.0 | 70.6 | 96.8 | 1.82 |

[Table 1g]

| <Example I-3 (cleaning liquid: 0.0001-weight% aqueous $\varepsilon$-polylysine solution having a pH of 12)> | | | | |
|---|---|---|---|---|
| Number of times immersed [time] | NaCl rejection rate [%] | IPA rejection rate [%] | Silica rejection rate [%] | Pure-water flux [m/day] |
| 0 | 98.3 | 77.9 | 98.0 | 1.52 |
| 1 | 98.3 | 80.1 | 98.1 | 1.57 |
| 4 | 97.8 | 80.1 | 98.2 | 1.52 |
| 8 | 97.5 | 77.9 | 97.9 | 1.53 |

[Table 1h]

| <Example I-4 (cleaning liquid: 0.3-weight% aqueous phenylalanine solution having a pH of 12)> | | | | |
|---|---|---|---|---|
| Number of times immersed [time] | NaCl rejection rate [%] | IPA rejection rate [%] | Silica rejection rate [%] | Pure-water flux [m/day] |
| 0 | 98.2 | 79.4 | 97.5 | 1.49 |
| 1 | 98.1 | 77.1 | 97.5 | 1.43 |

<Discussion>

As is clear from the results shown in Tables 1a to 1h, in Comparative example I-1, the NaCl, IPA, and silica rejection rates were reduced and the pure-water flux was increased. In Comparative examples 1-2 and 1-3, where an aqueous sodium hydroxide solution containing glycine or asparagine, which is a neutral amino acid, and having a pH of 12 was used as a cleaning liquid, reductions in the rejection rates could not be prevented. Reductions in the rejection rates could not be prevented also in Comparative example 1-4, where aspartic acid, which is an acidic amino acid, was used.

In contrast, in Example I-1, where an aqueous sodium hydroxide solution containing arginine, which is a basic amino acid, and having a pH of 12 was used, a reduction in the IPA rejection rate and an increase in the pure-water flux were prevented. In Example 1-2, where an aqueous sodium hydroxide solution containing aspartame and having a pH of 12 was used, reductions in the rejection rates due to the repeated cleaning were prevented after the first cleaning. In Example 1-3, where polylysine was used, a reduction in the IPA rejection rate and an increase in the pure-water flux were particularly prevented although the concentration of the polylysine was low, that is, 0.0001% by weight. If the concentration of polylysine exceeds 0.001% by weight, the cleaning effect may become degraded but the protection effect is achieved. In Example I-4, where the results of cleaning the membrane once with phenylalanine are obtained, a reduction in the IPA rejection rate and an increase in the pure-water flux were prevented when the concentration of phenylalanine was 0.3% by weight.

[Test II]

A test was conducted under the following conditions in order to determine the impacts of use of the protectant component on the cleaning effect of the cleaning liquid.

<RO Membranes>

(1) New membrane: Aromatic polyamide RO membrane "ES20" (produced by Nitto Denko Corporation), unused item
(2) Fouled membrane: A membrane having a smaller flux than the new membrane which was prepared by passing an aqueous solution including a nonionic surfactant (200-mg/L aqueous solution of SemiClean KG (produced by Yokohama Oils & Fats Industry Co., Ltd.)) through the new membrane at 0.75 MPa for 3 days.

<Cleaning Liquids>

The cleaning liquids used in Comparative example II-1 and Examples II-1 to II-4 were prepared by adding 0.15-weight% sodium dodecylbenzenesulfonate to the cleaning liquids used in Comparative example I-1 and Examples I-1 to 1-4, respectively.

<Testing Apparatus and Calculation Formula>

As in Test I

<Test Procedure>

The pure-water flux of the new membrane was measured at 0.75 MPa and 25°C. The fouled membrane was prepared by the above-described method. After the pure-water flux of the fouled membrane had been measured at 0.75 MPa and 25°C, the fouled membrane was immersed in the cleaning liquid for 15 hours and subsequently flushed with pure water for 2 hours. The pure-water flux of the cleaned membrane was measured at 0.75 MPa and 25°C.
Hereinafter, the pure-water flux of the new membrane is referred to as "pure-water flux before fouling", the pure-water flux of the fouled membrane is referred to as "pure-water flux after fouling", and the pure-water flux of the cleaned membrane is referred to as "pure-water flux after cleaning".
The ratio (percentage) of the pure-water flux after cleaning to the pure-water flux before fouling was calculated. This ratio is considered to be the recovery rate.

<Results>

Table 2 shows the results of the tests conducted in Comparative example II-1 and Examples II-1 to II-4.

[Table 2]

| | Pure-water flux [m/day] | | | Recovery rate [%] |
|---|---|---|---|---|
| | Before fouling | After fouling | After cleaning | |
| Comparative example II-1 | 1.29 | 0.65 | 1.15 | 89.1 |
| Example II -1 | 1.28 | 0.66 | 1.04 | 81.2 |

(continued)

| | Pure-water flux [m/day] | | | Recovery rate [%] |
|---|---|---|---|---|
| | Before fouling | After fouling | After cleaning | |
| Example II -2 | 1.46 | 0.68 | 1.27 | 87.0 |
| Example II -3 | 1.48 | 0.70 | 1.25 | 84.5 |
| Example II -4 | 1.46 | 0.69 | 1.24 | 84.9 |

<Discussion>

As is clear from the results shown in Table 2, a recovery rate of 80% or more was achieved in any of the tests. The absolute values of the fluxes after cleaning which were measured in Examples II-1 to II-4, where a protectant component was used, were comparable to the absolute value of the flux after cleaning which was measured in Comparative example II-1, where a protectant component was not used. Thus, it is considered that the likelihood of the protectant component according to the present invention degrading the cleaning effect is small.

[Test III]

A test in which a membrane is immersed in a cleaning liquid was conducted as in Test I (except that the number of times immersed was 1) in order to determine the impacts of immersing the membrane in the cleaning liquid on the rejection rate and pure-water flux of the membrane. In Comparative example III-1, the cleaning liquid (1) below was subjected to the test. In Example III-1, the cleaning liquid (2) below was subjected to the test.

<Cleaning Liquids>

Cleaning liquid (1): 0.17-weight% monochlorosulfamic acid and aqueous sodium hydroxide solution having a pH of 12
Cleaning liquid (2): 0.17-weight% monochlorosulfamic acid, 0.075-weight% $\varepsilon$-polylysine, and aqueous sodium hydroxide solution having a pH of 12

<Results>

Tables 3a and 3b show the results of the tests conducted in Comparative example III-1 and Example III-1, respectively.

[Table 3a]

| <Comparative example III-1 (cleaning liquid: 0.17-weight% monochlorosulfamic acid and aqueous sodium hydroxide solution having a pH of 12)> | | | | |
|---|---|---|---|---|
| Number of times immersed [time] | NaCl rejection rate [%] | IPA rejection rate [%] | Silica rejection rate [ %] | Pure-water flux [m/day] |
| 0 | 99.0 | 81.8 | 98.4 | 1.50 |
| 1 | 98.5 | 70.4 | 97.1 | 1.87 |

[Table 3b]

| <Example III-1 (cleaning liquid: 0.17-weight% monochlorosulfamic acid, 0.075-weight% $\varepsilon$-polylysine, and aqueous sodium hydroxide solution having a pH of 12)> | | | | |
|---|---|---|---|---|
| Number of times immersed [time] | NaCl rejection rate [%] | IPA rejection rate [%] | Silica rejection rate [%] | Pure-water flux [m/day] |
| 0 | 99.1 | 81.9 | 98.4 | 1.49 |

(continued)

| <Example III-1 (cleaning liquid: 0.17-weight% monochlorosulfamic acid, 0.075-weight% ε-polylysine, and aqueous sodium hydroxide solution having a pH of 12)> | | | | |
|---|---|---|---|---|
| Number of times immersed [time] | NaCl rejection rate [%] | IPA rejection rate [%] | Silica rejection rate [%] | Pure-water flux [m/day] |
| 1 | 99.2 | 82.6 | 98.5 | 1.31 |

<Discussion>

As is clear from the results shown in Tables 3a and 3b, in Comparative example III-1, the NaCl, IPA, and silica rejection rates were reduced and the pure-water flux was increased. In contrast, in Example III-1, reductions in the NaCl, IPA, and silica rejection rates and an increase in the pure-water flux were prevented.

[Test IV]

A test in which a membrane is cleaned with a cleaning liquid was conducted as in Test II in order to determine the impacts of use of the protectant component on the cleaning effect of the cleaning liquid. In Comparative example IV-1, the cleaning liquid (1) below was subjected to the test. In Example IV-1, the cleaning liquid (2) below was subjected to the test.

<Cleaning Liquids>

Cleaning liquid (1): 0.17-weight% monochlorosulfamic acid and aqueous sodium hydroxide solution having a pH of 12
Cleaning liquid (2): 0.17-weight% monochlorosulfamic acid, 0.075-weight% ε-polylysine, and aqueous sodium hydroxide solution having a pH of 12

<Results>

Table 4 shows the results of the tests conducted in Comparative example IV-1 and Example IV-1.

[Table 4]

| | Pure-water flux [m/day] | | | Recovery rate [%] |
|---|---|---|---|---|
| | Before fouling | After fouling | After cleaning | |
| Comparative example IV-1 | 1.32 | 0.72 | 0.99 | 75.0 |
| Example IV-1 | 1.50 | 0.72 | 1.08 | 72.0 |

<Discussion>

As is clear from the results shown in Table 4, a recovery rate comparable to that achieved in Comparative example VI-1 was achieved in Example VI-1. Thus, it is considered that the likelihood of the protectant component according to the present invention degrading the cleaning effect is small. If the concentration of polylysine exceeds 0.1% by weight, the cleaning effect may become degraded but the protection effect is achieved.

Although the present invention has been described in detail with reference to particular embodiments, it is apparent to a person skilled in the art that various modifications can be made therein without departing from the spirit and scope of the present invention.

The present application is based on Japanese Patent Application No. 2015-102911 filed on May 20, 2015, which is incorporated herein by reference in its entirety.

Reference Signs List

1    CONTAINER
2    RO MEMBRANE CELL
3    STIRRER
4    HIGH-PRESSURE PUMP
5    STIRRING BAR
6    PRESSURE GAGE
7    PRESSURE CONTROL VALVE

**Claims**

1.  An agent for cleaning a reverse osmosis membrane, the agent comprising a membrane protectant, the membrane protectant being a basic or hydrophobic amino acid, a peptide containing the amino acid as a constituent amino acid, or a derivative of the amino acid or the peptide.

2.  The agent for cleaning a reverse osmosis membrane according to Claim 1, wherein the amino acid is at least one amino acid selected from the group consisting of arginine, lysine, and phenylalanine.

3.  The agent for cleaning a reverse osmosis membrane according to Claim 1 or 2, the agent further comprising at least one selected from the group consisting of an alkaline agent, a combined chlorine agent, and an oxidizing agent.

4.  A liquid for cleaning a reverse osmosis membrane, the liquid being an aqueous solution produced by diluting the agent for cleaning a reverse osmosis membrane according to any one of Claims 1 to 3.

5.  A liquid for cleaning a reverse osmosis membrane, the liquid comprising a membrane protectant and at least one selected from the group consisting of an alkaline agent, a combined chlorine agent, and an oxidizing agent, the membrane protectant being a basic or hydrophobic amino acid, a peptide containing the amino acid as a constituent amino acid, or a derivative of the amino acid or the peptide.

6.  The liquid for cleaning a reverse osmosis membrane according to Claim 4 or 5, the liquid having a pH of 10 to 14.

7.  A method for cleaning a reverse osmosis membrane, the method comprising bringing a reverse osmosis membrane into contact with the liquid for cleaning a reverse osmosis membrane according to any one of Claims 4 to 6.

8.  The method for cleaning a reverse osmosis membrane according to Claim 7, wherein the reverse osmosis membrane is an aromatic polyamide reverse osmosis membrane.

Fig.1

PERMEATE

FEED WATER

CONCENTRATE

## INTERNATIONAL SEARCH REPORT

| International application No. |
|---|
| PCT/JP2016/059146 |

A.   CLASSIFICATION OF SUBJECT MATTER
*B01D65/06*(2006.01)i, *B01D71/56*(2006.01)i, *C11D7/32*(2006.01)i, *C11D17/08*
(2006.01)i

According to International Patent Classification (IPC) or to both national classification and IPC

B.   FIELDS SEARCHED

Minimum documentation searched (classification system followed by classification symbols)
B01D53/22, B01D61/00-71/82, C02F1/44, C11D1/00-19/00

Documentation searched other than minimum documentation to the extent that such documents are included in the fields searched
Jitsuyo Shinan Koho          1922–1996    Jitsuyo Shinan Toroku Koho    1996–2016
Kokai Jitsuyo Shinan Koho    1971–2016    Toroku Jitsuyo Shinan Koho    1994–2016

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | WO 2013/179775 A1  (Kurita Water Industries Ltd.), 05 December 2013 (05.12.2013), claims; paragraphs [0006] to [0046], [0051] to [0054] & US 2015/0045276 A1 claims; paragraphs [0009] to [0054], [0061] to [0065] | 1-8 |
| Y | JP 2012-187468 A  (Kurita Water Industries Ltd.), 04 October 2012 (04.10.2012), paragraphs [0039] to [0054] & US 2013/0324678 A1 paragraphs [0047] to [0067] & WO 2012/121209 A1      & CN 103429325 A | 1-8 |

| ☒  Further documents are listed in the continuation of Box C. | ☐   See patent family annex. |
|---|---|

\*    Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 30 May 2016 (30.05.16) | 07 June 2016 (07.06.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
| --- |
| PCT/JP2016/059146 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2012/057188 A1  (Toray Industries, Inc.), 03 May 2012 (03.05.2012), & US 2013/0220924 A1    & EP 2633899 A1 & CN 103189130 A          & KR 10-2013-0135855 A | 1-8 |
| A | JP 2008-183510 A  (Toray Industries, Inc.), 14 August 2008 (14.08.2008), (Family: none) | 1-8 |
| A | JP 2001-507750 A  (Bayer AG.), 12 June 2001 (12.06.2001), & US 6387189 B1         & WO 1998/030661 A1 & EP 970167 A1 | 1-8 |
| A | JP 2012-187469 A  (Kurita Water Industries Ltd.), 04 October 2012 (04.10.2012), & US 2013/0324664 A1    & WO 2012/121208 A1 & EP 2684598 A1         & CN 103429324 A & KR 10-2014-0066661 A | 1-8 |
| A | WO 2011/040354 A1  (Kurita Water Industries Ltd.), 07 April 2011 (07.04.2011), & JP 5633517 B2         & US 2012/0168370 A1 & CN 102695555 A | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08309164 A
- JP 2004082021 A
- JP 2003144865 A
- JP S63100998 A
- JP 2015009178 A
- JP 5633517 B
- JP 2015102911 A

**Non-patent literature cited in the description**

- Outline of Membrane Separation Technology. Fuji Techno System, 1991, vol. 1, 836